# EUROPEAN PATENT APPLICATION

(11) **EP 2 438 964 A1**
(43) Date of publication of application: **11.04.2012**
(21) Application number: 09845459.8
(22) Date of filing: 03.06.2009
(51) Int. Cl.: A62C 99/00, G09B 9/00

(54) **TRACER SMOKE GENERATOR FOR VENTILATION TESTS**

(71) Applicant: Fundacion Labein, 48160 Derio, Vizcaya (ES)
(72) Inventor: DE LA QUINTANA PEREZ, Jesús, E-48160 DERIO (Vizcaya) (ES); UGARTETXE FERNANDEZ, Ramón, E-48160 DERIO (Vizcaya) (ES); MORENTE BELMEZ, Fernando, E-48160 DERIO (Vizcaya) (ES); AURTENETXE FUIKA, Jon, E-48160 DERIO (Vizcaya) (ES); PEREZ JIMENEZ, Cristian, E-48160 DERIO (Vizcaya) (ES)
(74) Representative: Carpintero Lopez, Francisco
(86) International application number: PCT/ES2009/070203
(87) International publication number: WO 2010/139815

(57) **Abstract**

The invention relates to tracer smoke generating equipment for ventilation tests with a plurality of containers (1) for housing a plurality of smoke pots (2), and a collection box (4) for collecting smoke generated by each smoke pot (2) and a common smoke outlet (11) connectable to smoke conducting means (12), wherein
each container (1) has a smoke outlet (5) in the upper base (1a) and an air inlet (6) connectable to air driving means (7) in its front end (1c), a water outlet (8) and a water inlet (9);
the containers (1) are arranged in the base plate (3) in two rows such that the rear ends (1d) of the containers (1) of the first row are facing the rear ends (1d) of the containers (1) of the second row.

## Description

### Technical field of the Invention

The present invention is encompassed in the technical field of tracer smoke generating equipment for ventilation tests, particularly for non destructive tests in existing facilities, and is especially useful in fire safety system tests.

### Background of the Invention

Performing more exhaustive and complex studies of fire development and ventilation analysis and smoke extraction is increasingly necessary today. Therefore, in the field of fire safety a revolution inspired by the growing social awareness towards the safety of people affected by fires has been occurring in the last few years, guided by the response of the administration in transforming rules and regulations, the progress of knowledge and related technologies. Within this revolution it is worth noting an important change in the subject of safety priority in case of fire, which has changed to focusing solely on "people", considering both the occupants of the building or infrastructure and the extinguishing and rescue services which must finally deal with the emergency.

Research is usually conducted in different technology environments to achieve test equipment that reproduces conditions similar to those that would be produced in real life, but controlled in terms of traceability, repeatability and non-destructiveness. Performances that the systems will provide in the actual place where they are installed can be compared and verified in said manner. It is known that deviations with respect to the objectives required by regulation can occur particularly in fire safety system installation projects. Therefore, the possible error accumulated in the different steps can lead to a large deviation from the safety objectives which the designer aimed to fulfil with respect to that really achieved. Thus, on site field verification tests in service conditions of the premises object of the study are desirable. In addition, it is obvious that if the type of action to be tested is intrinsically destructive, as a fire is, a greater difficulty arises at the time of considering a field test producing the effects with which the study premise is to be affected. The on site check by means of tests is, therefore, an efficient tool for verifying the fire safety systems.

Basically, the following test systems exist for such verifications, all of which are based on generating smoke by means of equipment which allows generating smoke and conducting it to specific locations, thus simulating the generation of smoke in a fire source:

Cold test of clean smoke: This system has the advantage that the smoke is completely clean but its results are not accurate. The great problem of this type test is that the temperature of the exiting smoke tends to be around 40ºC, such that it can be considered that the smoke generated is cold smoke and, therefore, a rise and stratification thereof is not achieved and therefore a fire scene is not produced in a realistic way.

Real fire test: It is performed by means of a hydrocarbon pit. Hot exiting smoke which is the same as in a real fire situation is achieved, even though said smoke is dirty. Due to this, the real fire test has a destructive character, since many of the elements of the infrastructure or building would be damaged after the test, their repair being able to be more costly than said test itself. Furthermore, controlling the flow of smoke therein is complicated.

Clean hot smoke test: It combines the advantages of the two types of tests described above, the characteristics of this type of test are the cleanliness of the smoke thereof and this smoke is also hot smoke, and is controlled at all times. A real fire scene is therefore produced in the most accurate way possible. Nevertheless, the equipment which allows performing this type of test is complicated in terms of its structure and/or its on site assembly.

### Description of the Invention

The object of the present invention is to overcome the drawbacks of the state of the art detailed above, by means of a tracer smoke generating equipment for ventilation tests with a plurality of containers for housing at least one smoke pot, a base plate in which the containers are arranged, and collection means for collecting smoke generated by each smoke pot, **characterised in that**
each container is sized for housing a plurality of smoke pots and comprises an upper base, a lower base, a front end, a rear end and respective side walls, an individual smoke outlet in the upper base and, an air inlet in its front end in position close to the upper base and connectable to air driving means, an upper water inlet and a lower water outlet;
the containers are arranged in the base plate in a first row and a second row such that the rear ends of the containers of the first row are facing the rear ends of the containers of the second row;
the base plate comprises guides for positioning each container in a predetermined position;
the collection means comprise a collection box with respective smoke inlets connected to the individual smoke outlets of the containers of at least one of the rows of containers, and a common smoke outlet connectable to smoke conducting means.

The air driving means can be respective electric fans connected to the air inlets of the containers. For supplying electricity to these fans, the equipment can comprise a power supply system comprising strips with respective sockets for the fans mounted on the base plate, preferably at the front, such that a socket is arranged in front of each container. The air inlets of the containers are preferably horizontal tubes which can comprise a guide conduit for guiding pyrotechnic initiator cables connectable to the smoke pots.

Each individual smoke outlet can be a vertical tube emerging from the upper base of the container and the smoke inlets are arranged in the lower face of the collection box. The collection means preferably comprise a first collection box connected by its smoke inlets to the smoke outlets of said first row of containers and a second collection box connected to the smoke outlets of said second row of containers. The common smoke outlet of each collection box can be a tubular conduit emerging from the front face of the collection box.

The containers can be filled with water through the water inlets for cooling the smoke pots. That water can then be drained by the water outlets. The water inlets of the containers can be provided with respective ball valves, of the faucet type. Likewise, the water outlets of the containers can be provided with respective ball valves.

In a preferred embodiment of the invention, the base plate is the platform of a trailer, which allows moving the equipment to the locations in which ventilation tests are to be carried out.

The equipment can comprise a power supply system in the form of a PLC ("Programmable Logic Circuit") housed in a cabinet for supplying power to the electric fans. The PLC receives power supply from an external source and supplies it to the sockets arranged in strips mounted on the base plate in front of the front ends of the containers. Test programme data (fan speed and action time, etc.) can be stored in the PLC to enable adapting the equipment operation to the needs of specific test programmes.

In a practical embodiment, the supply system also comprises an electric panel made up of
- Auto-transformer
- Relay fans
- Thermal differential and magneto
- 220V supply inlet

Due to the need of supplying power to this panel (which in turn supplies the fans of the containers), there is a 220 V female Schuko which must be plugged into a power source. The most convenient alternative is that of using a male-male extension from the electric panel of the heat generating equipment to that of the tracer smoke generating trailer when both parts work together.

It can be observed that the tracer smoke generating equipment efficiently overcomes the drawbacks of the state of the art by means of highly efficient equipment, of great structural simplicity and easy assembly and handling.

### Brief Description of the Drawings

Aspects and embodiments of the invention are described below based on several drawings, in which
Figure 1 is a schematic front elevational view of an embodiment of the equipment according to the present invention:
Figure 2 is a schematic rear elevational view of the equipment shown in Figure 1;
Figure 3 is side schematic view of the equipment shown in Figure 1;
Figure 4 is a schematic lower plan view of the collection box shown in Figure 1;
Figure 5 is a schematic upper plan view of the collection box shown in Figure 1;
Figure 6 is a schematic front elevational view of one of the containers forming part of the equipment shown in Figure 1;
Figure 7 is a schematic side elevational view of one of the containers forming part of the equipment shown in Figure 1;
Figure 8 is a schematic upper plan view of the container shown in Figure 7;
Figure 9 is a schematic cross section view of the horizontal tube of the container shown in Figure 7;
Figure 10 is a schematic cross section view of an embodiment of a smoke pot of those which can be housed in the containers of the equipment according to the present invention;
Figure 11 is a schematic upper plan view of the closing element for the smoke pot shown in Figure 10;
Figure 12 is a schematic upper plan view of the upper filter for the smoke pot shown in Figure 10;
Figure 13 is a schematic upper plan view of the spacer ring for the smoke pot shown in Figure 10;
Figure 14 is a schematic upper plan view of the lower filter for the smoke pot shown in Figure 10;
Figure 15 is a side sectional view of the container shown in Figure 7 and of one of the collection boxes shown in Figure 1;
Figure 16 is an upper plan view of an embodiment of the base plate forming part of the equipment shown in Figure 1.

These figures contain numerical references identifying the following elements:
- 1: container
- 1a: upper base
- 1b: lower base
- 1c: front end
- 1d: rear end
- 1e, 1f: side walls
- 2: smoke pot
- 2a: upper opening of the smoke pot
- 3: base plate
- 3a, 3b, 3c, 3d: guides
- 3e: housings
- 4: collection box
- 5: individual smoke outlet
- 5a: vertical tube
- 5b: perimeter flange
- 6: air inlet
- 6a: horizontal tube
- 7: electric fan
- 8: lower water outlet
- 8a: ball valve
- 9: upper water inlet
- 9a: ball valve
- 10: smoke inlet
- 10a: anular reinforcement
- 11: common outlet
- 11a: tubular conduit
- 12: smoke conductor tube
- 13: guide conduit
- 14: power supply system
- 14a: strip
- 14b: socket
- 15: lower filter
- 15a: opening
- 16: spacer ring
- 17: upper filter
- 17a: opening
- 18: closing ring
- 18a: through hole
- 18b: tab
- 19: threaded rod
- 20: bracket

### Embodiments of the Invention

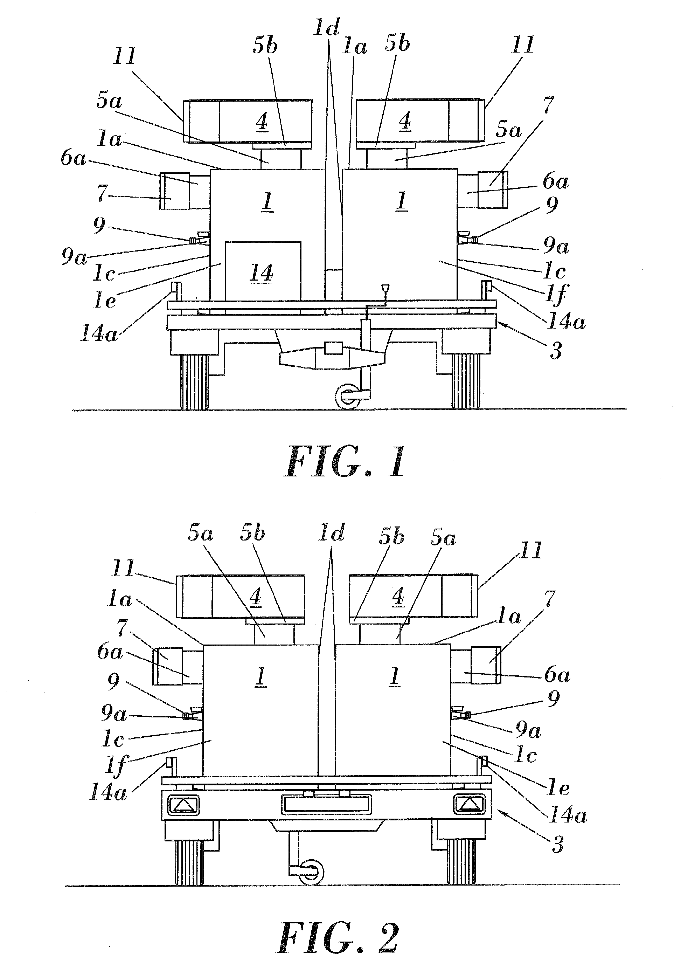

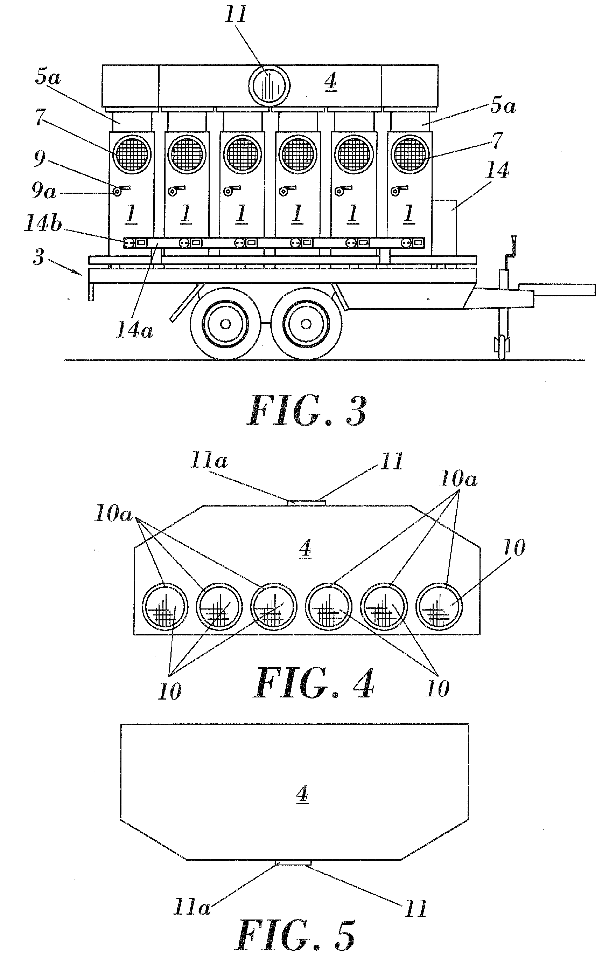

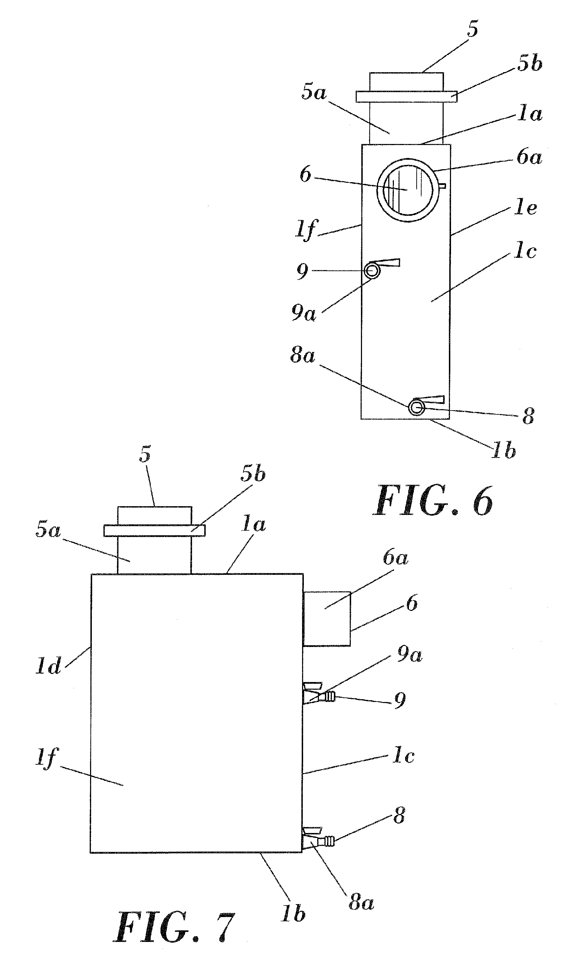

As can be seen in the embodiment of the of tracer smoke generating equipment for ventilation tests shown in Figures 1 to 9, 15 and 16, this equipment comprises to plurality of containers -1- each housing five smoke pots -2- and arranged in a base plate -3-, as well as collection means -4- for collecting smoke generated by each smoke pot -2-. The base plate -3- is the platform of a trailer. The smoke pots -2- are filled with of a mixture of known highly reactive products that once activated by the action of pyrotechnic initiator, it generates smoke and heat (approximately 300ºC).

Each container -1- comprises an upper base -1a-, a lower base -1b-, a front end -1c-, a rear end -1d- and respective side walls -1e, 1f-, an individual smoke outlet -5- in the upper base -1a- and, an air inlet -6- in its front end -1c- in a position close to its upper base -1a-. The smoke pots -2- can be introduced in the container -1- through the individual smoke outlet -5-. Each air inlet -6- is connected through a horizontal tube -6a-, to an electric fan-7-, for example of 125 W each, driving air into the container -1-. Each of the horizontal tubes -6a- comprises a guide conduit -13- for guiding pyrotechnic initiator cables (no shown in the drawings) connectable to the smoke pots -12-.

Each container further comprises a lower water inlet -8- with a lower ball valve -8a- and an upper water outlet -9- with an upper ball valve-9a-. The containers -1- are arranged in the base plate -3- in a first row and a second row such that the rear ends -1d- of the containers -1- of the first row are facing the rear ends -1d- of the containers -1- of the second row. The individual smoke outlets -5- of the containers -1- are provided with respective vertical tubes -5a- emerging from the respective upper bases -1a- of the containers -1-.

A first collection box -4- is connected by the smoke inlets -11- provided in its lower face to the smoke outlets -5- of the first row of containers -1- and a second collection box -4- is connected by the smoke inlets -11- provided in its lower face to the smoke outlets -5- of the second row of containers -1-. Each collection box -4- comprises a common smoke outlet -11- in the form a tubular conduit 11a emerging from its front face, through which the smoke is expelled driven by the action of the electric fans -7-. For securely joining the smoke inlets -10- of the box -4- to the vertical tubes -5a- of the containers -1-, each vertical tube can be provided with a perimeter flange-5b- aligned with an anular reinforcement -10a- surrounding the corresponding smoke inlet -10-, with the convenient interposition of ring seal (no shown in the drawings). The perimeter flange-5b- can be screwed to the anular reinforcement -10a- in a known way, for example by means of screws or threaded rail sets-nuts (no shown in the drawings).

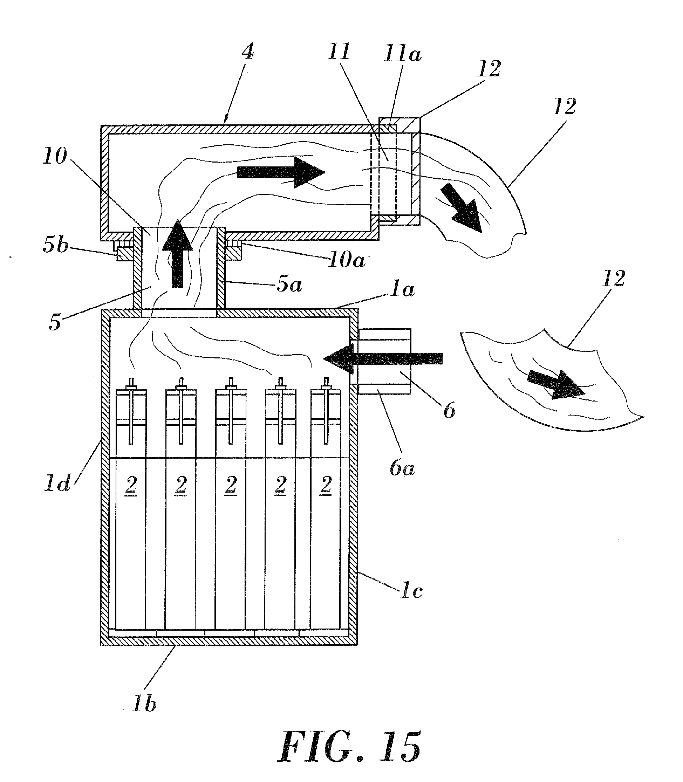

As seen in Figure 15, the containers -1- are filled with water for cooling the smoke pots -2- when these are heated while generating smoke and heat. The water is introduced through the valve -8-. The level of the water contained in the containers -1- is below the plane in which the overflow -9- is located and, evidently, below the upper part of the smoke pots -2-.The containers -1- are filled with water for cooling the smoke pots -2- through the water inlets -9a-. The water can then be drained later through the water outlets -8-.

The equipment comprises a power supply system -14- in the form of a PLC (Programmable Logic Circuit) housed in a cabinet for supplying electricity to the electric fans. The PLC receives a power supply from an outside source (not shown in the drawings) and supplies it to the sockets -14a- arranged in the strips -14- mounted on the base plate -3- in front of the front ends -1c- of the containers-1-. Test programme data (fan speed and action time, etc.) can be stored in the PLC in order to adapt the equipment operation to the needs of specific test programmes.

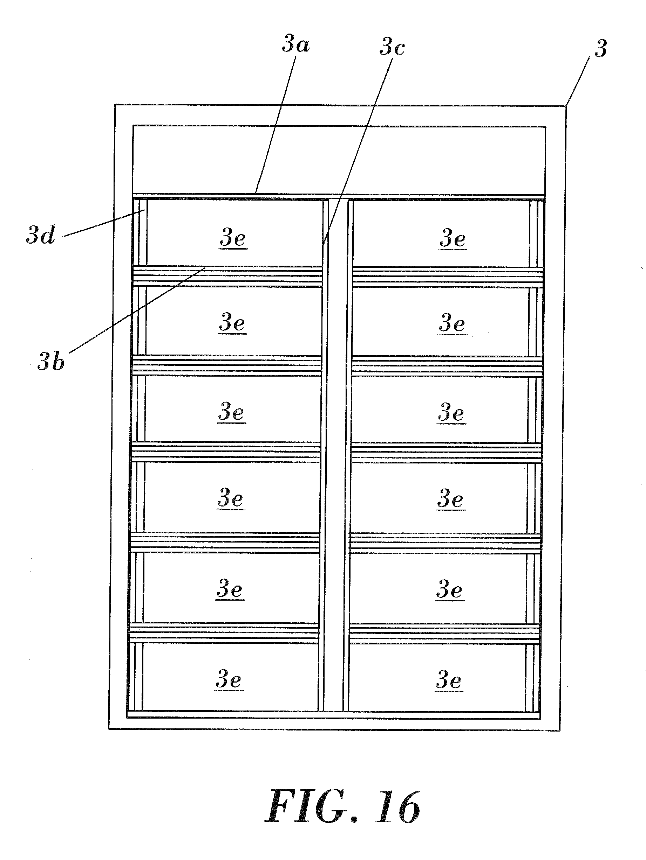

As can seen in Figure 16, the base plate -3- comprises a lower guide -3c-, a front guide -3d- and respective side guides -3a, 3b- emerging from the horizontal plane of the base plate -3- such that they define between each other respective housings -3e- in which the respective lower bases -1b- of the containers -1- fit. The containers -1- are thus arranged in predetermined positions allowing their smoke outlets -5- to be aligned with the respective smoke inlets -10- of the collection boxes -4-.

To prepare the equipment, first the smoke pots -2- are placed in the respective containers -1- through the individual smoke outlets -5-. Next pyrotechnic devices the action of which will activate the smoke pots -2- are placed and the cables of the respective devices are taken out through the conduits -13-. Then the two collection boxes -4- are connected to the respective smoke outlets -5- of the rows of the containers -1-. Next, the containers -1- are filled with cooling water through the respective water inlets -9- so that the water acts as cooling means for cooling the smoke pots -2-. Filling the containers -1- in an alternating manner is recommended, starting with a container from one row and continuing with the container -1- from the other row to avoid possible oscillations of the trailer supporting them. Subsequently, the pyrotechnic devices are switched on to therefore activate the generation of smoke by the smoke pots -2-. The smoke generated in each container -1- is entrained by the action of the air current driven by the fans -7- towards the inside of the respective collection box -4- to which they are connected, and ejected by the common smoke outlet -11- of the collection box -4- to a smoke conductor tube-12- connected to the tubular conduit -11a- of said common outlet -11-.

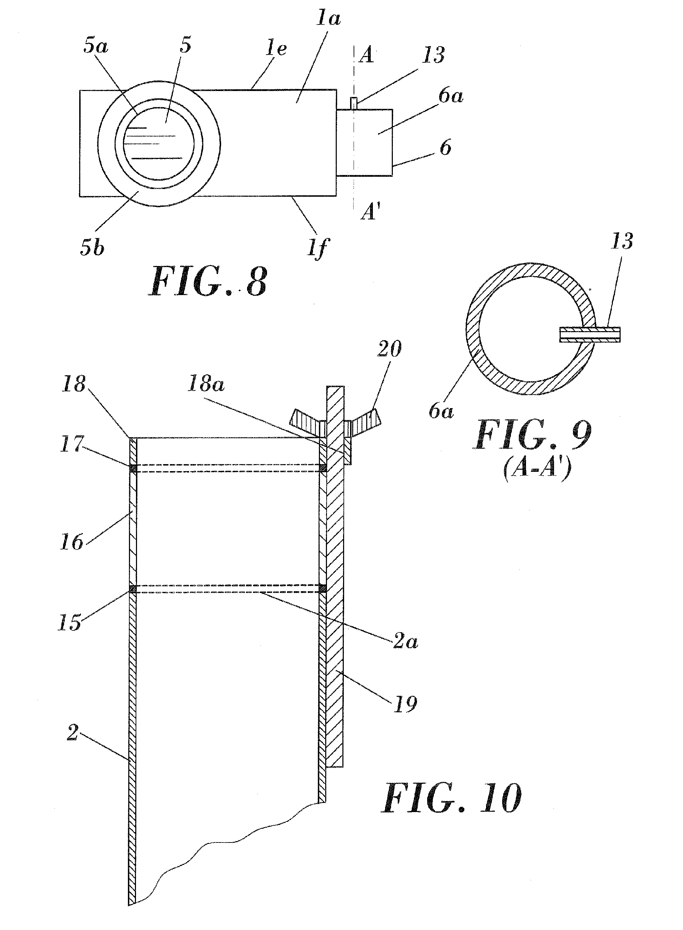

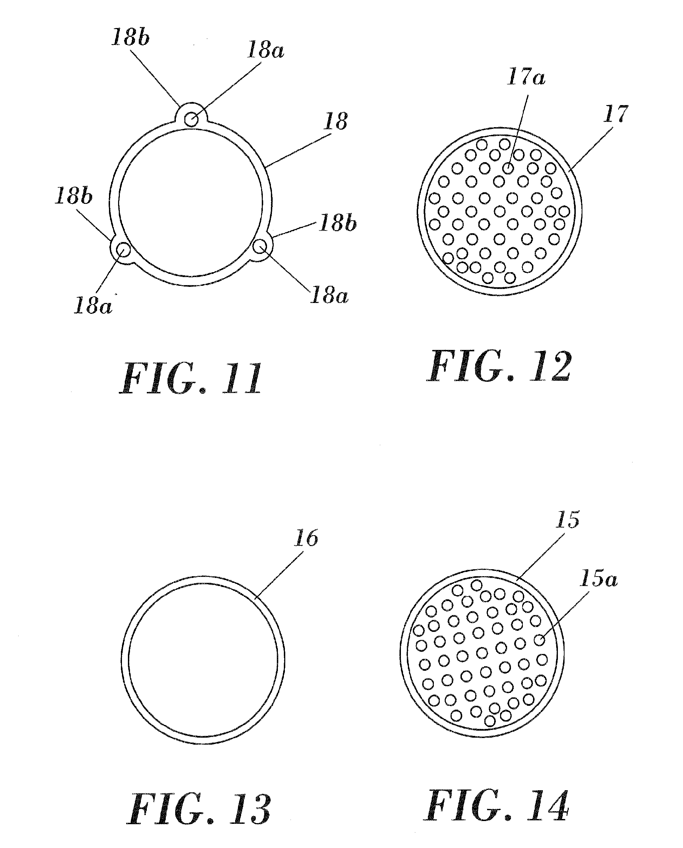

In the embodiment shown in Figures 10-14, in the upper opening -2a-of the smoke pot -2- there is arranged a lower ring filter-15-, on which a spacer ring -16- is arranged, on which, in turn, an upper ring filter -17- is arranged. The filters -15, 17- respectively comprise a ring part surrounding a central sheet part with respective openings -15a, 17a- through which the smoke generated by the smoke pot -2- can penetrate but which simultaneously prevents foreign bodies from entering the inside of the pot -2- and the exit of materials from inside the pot -2-.

Three threaded rods -19- are equidistantly welded to the outer wall of the smoke pot -2-, the upper ends of which emerge through respective through holes -18a- in respective tabs -18b- emerging from the contour of a locking ring -18-. At the upper ends of the three rods -19- respective brackets -20- are screwed in, the assembly formed by the filters -15, 17-, the spacer ring -16- and the locking ring -18- in the smoke pot -2- being thereby securely immobilised.

## Claims

1. Tracer smoke generating equipment for ventilation tests with a plurality of containers (1) for housing at least one smoke pot (2), a base plate (3) in which the containers (1) are arranged, and collection means (4) for collecting smoke generated by each smoke pot (2), **characterised in that**
each container (1) is sized for housing a plurality of smoke pots (2) and comprises an upper base (1a), a lower base (1b), a front end (1c), a rear end (1d) and respective side walls (1e, 1f), an individual smoke outlet (5) in the upper base (1a) and an air inlet (6) in its front end (1c) in a position close to the upper base (1a) and connectable to air driving means (7), a lower water outlet (8) and an upper water inlet (9);
the containers (1) are arranged in the base plate (3) in a first row and a second row such that the rear ends (1d) of the containers (1) of the first row are facing the rear ends (1d) of the containers (1) of the second row;
the base plate (3) comprises guides (3a, 3b, 3c, 3d) for positioning each container (1) in a predetermined position;
the collection means (4) comprise a collection box (4) with respective smoke inlets (10) connected to the individual smoke outlets (5) of the containers (1) of at least one of the rows of containers (1), and a common smoke outlet (11) connectable to smoke conducting means (12).

2. Tracer smoke generating equipment according to claim 1, **characterised in that** each individual smoke outlet is a vertical tube (5a) emerging from the upper base (1a) of the container (1) and the smoke inlets (10) are arranged in the lower face of the collection box (4).

3. Tracer smoke generating equipment according to claim 1 or 2, **characterised in that** the air inlet (6) of each container is a horizontal tube (6a).

4. Tracer smoke generating equipment according to claim 3, **characterised in that** the horizontal tube (6a) comprises a guide conduit (13) for guiding pyrotechnic initiator cables connectable to the smoke pots (2).

5. Tracer smoke generating equipment according to any one of the preceding claims, **characterised in that** the base plate (3) is a platform of a trailer.

6. Tracer smoke generating equipment according to any one of the preceding claims, **characterised in that** the air driving means (7) are respective electric fans (7) connected to the air inlets (6) of the containers (1).

7. Tracer smoke generating equipment according to claim 6, **characterised in that** it comprises a power supply system (14) comprising strips (14a) with respective sockets (14b) for said fans (7) mounted on the base plate.

8. Tracer smoke generating equipment according to any one of the preceding claims, **characterised in that** the water inlets (9) of the containers (1) are provided with respective ball valves (9a).

9. Tracer generating equipment according to any one of the preceding claims, **characterised in that** the water outlets (8) of the containers (1) are provided with respective ball valves (8a).

10. Tracer smoke generating equipment, according to any one of the preceding claims, **characterised in that** the common smoke outlet (11) of the collection box (4) is a tubular conduit (11a) emerging from the front face of the collection box (4).

11. Tracer smoke generating equipment according to any one of the preceding claims, **characterised in that** the collection means (4) comprise a first collection box (4) connected by its smoke inlets (11) to the smoke outlets (5) of said first row of containers (1) and a second collection box (4) connected by its smoke inlets (11) to the smoke outlets (5) of said second row of containers (1).
